# EUROPEAN PATENT SPECIFICATION

(11) **EP 4 411 088 B1**
(45) Date of publication and mention of the grant of the patent: **06.08.2025**
(21) Application number: 23155051.8
(22) Date of filing: 06.02.2023
(51) Int. Cl.: E04G 15/06, E04G 21/18, F16L 5/04, H02G 3/04, H02G 3/22, F16L 5/02

(54) **DEVICE FOR BUILDING CONSTRUCTION**
VORRICHTUNG FÜR BAU
DISPOSITIF POUR LA CONSTRUCTION DE BÂTIMENTS

(43) Date of publication of application: 07.08.2024
(73) Proprietor: Easy Technic SA, 1630 Bulle (CH)
(72) Inventor: Sonney, Nicolas, 1624 Grattavache (CH); Guillet, Laurent, 1628 Vuadens (CH)
(74) Representative: P&TS SA (AG, Ltd.)

(56) References cited:
- EP-A1- 3 470 718
- WO-A1-81/02815
- KR-A- 20180 052 250
- US-A1- 2016 090 738

## Description

### Technical domain

The present invention concerns an obturating assembly for building constructions. It concerns in particular an assembly comprising an obturating bloc and an adjusting device so that the thickness of the obturating assembly can be adapted according to the thickness of the concrete slab poured around it. The present invention further relates to a method of pouring a concrete slab or wall using such an obturating assembly.

### Related art

According to the traditional methods of building construction, concrete is poured in a way to provide a slab or a wall. Where openings are envisaged, formworks needs to be prepared, which necessitates extra costs and time of work. Furthermore, the opening resulting from the pouring around the formwork remains free, which represents a risk of falling through it.

In addition, where technical elements such as pipes, cables, channelling need to be arranged across the wall or the slab, additional isolation step, in particular against fire and/or water, is needed.

Some solutions have been proposed to limit the amount of work and increase the safety of such building processes. In particular, the patent application EP3730722 discloses a process and an isolating bloc adapted to obturate an area prior the pouring of concrete, so that an opening is managed in the concrete after pouring, while still being secured with an isolating material. EP3470718 A1 discloses a height-adjustable housing with an isolating block for pipes or lines passing through wall or ceiling openings of a building.

However, the dimensions, in particular the thickness, of such isolating blocs are predetermined, and may not be as suitable as required, compared to the thickness of the envisaged slab or wall.

Therefore, there is room for improvement of such isolating blocs and processes.

### Short disclosure of the invention

An aim of the present invention is the provision of an improved device that overcomes the shortcomings and limitations of the state of the art. It is in particular an aim the present disclosure to provide an isolating or obturating system the dimension of which can easily be modulated according to the needs.

Another aim of the invention is to provide an improved method of pouring some concrete while reserving an opening, in a more flexible way and/or cost effective manner.

According to the invention, these aims are attained by the object of the independent claims, and further detailed in the claims dependant thereof.

With respect to what is known in the art, the invention provides the advantage that a wall or a slab can be poured in a more flexible and /or cost effective way.

### Short description of the drawings

Exemplar embodiments of the invention are disclosed in the description and illustrated by the following drawings:
- Figure 1 : Example of an adjusting device according to an embodiment of the present disclosure.
- Figure 2: Schematic side view of an adjusting device according to an embodiment of the present disclosure.
- Figures 3a, 3b: Schematic side view of a lateral wall of the adjusting device according to an embodiment of the present disclosure.
- Figure 4: Schematic representation of the assembly according to an embodiment of the present disclosure.
- Figure 5: Example of the assembly according to an embodiment of the present disclosure.
- Figure 6: Schematic representation of the assembly according to another embodiment of the present disclosure

### Examples of embodiments of the present invention

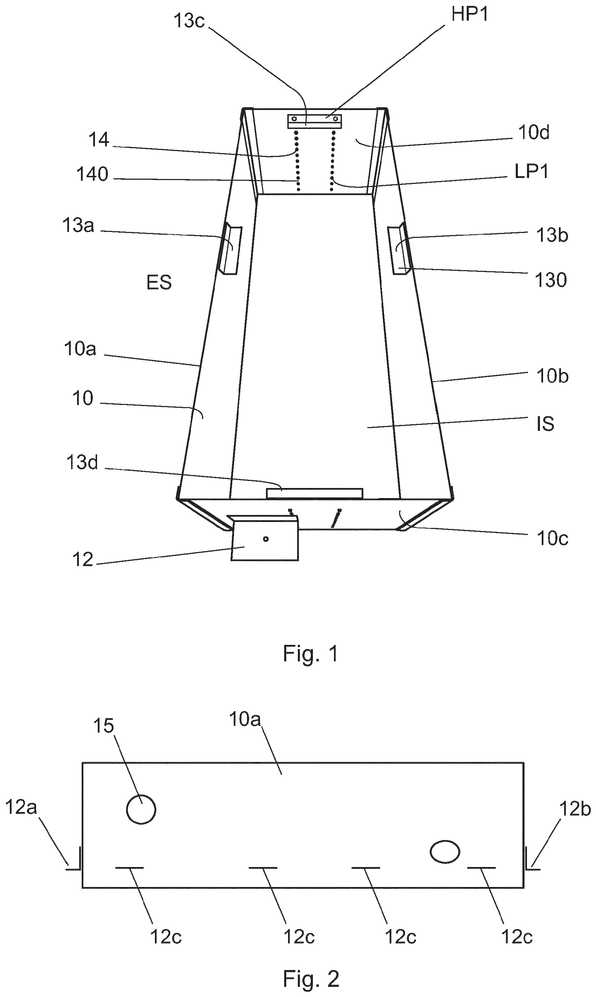

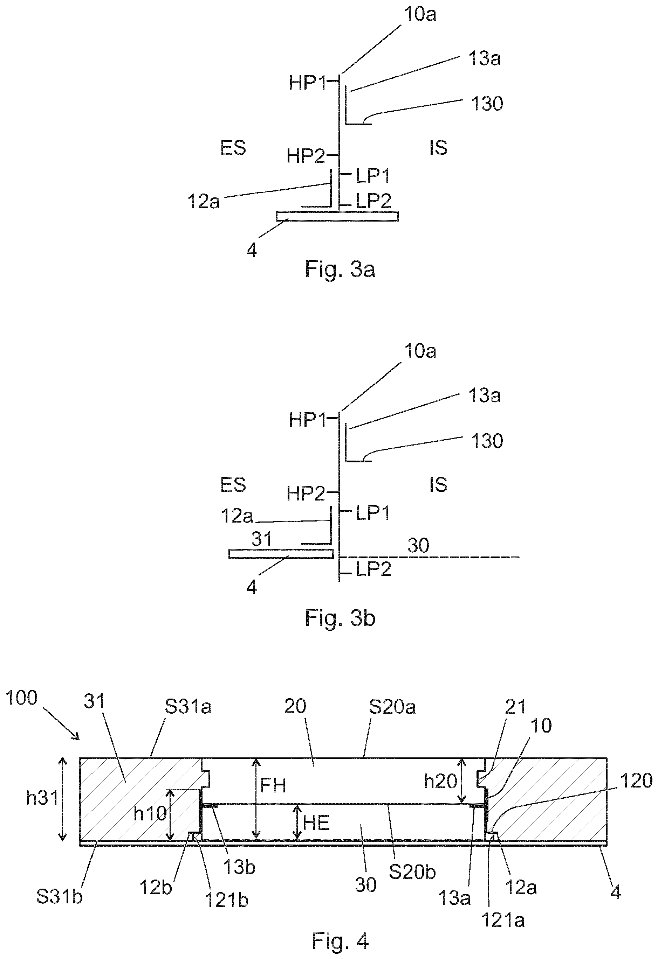

With reference to figures 1, 2 and 3, the adjusting device **10** according to the present disclosure is adapted to maintain an obturating bloc **20,** better visible in figures 4, 5 or 6, in a concrete pouring at a predetermined position. The position refers here to the two dimension coordinates on the plane where the concrete is poured. The position also comprises a third dimension, related to the elevation HE (figure 4) of the obturating bloc **20.** In other words, the present adjusting device **10** allows to maintain the obturating bloc **20** at a certain elevation above a support **4.**

The obturating bloc **20** has a given heigh or thickness, a so called bloc height **H20,** which does not necessarily corresponds to the height or thickness of the slab or wall **31,** the so called concrete height **H31.** In particular, the bloc heigh **H20** can be lower that the expected thickness of the slab **31.** It remains however necessary that a first surface **S20a** of the obturating bloc **20** flushes with the surface **S31a** of the concrete, once poured.

To this end, the adjusting device according to the present disclosure comprises lateral walls 10a, **10b,** 10c, **10d** adapted to surround an obturating bloc **20.** The lateral walls of the adjusting device **10** define an internal space **IS** wherein an obturating bloc **20** can be lodged. The shape and dimensions of this internal space are thus determined to fit around the obturating bloc **20.** This means that the lateral surfaces of the obturating bloc **20** are preferably in close contact with the lateral walls of the adjusting device **10.** The shape of the adjusting device **10** is adapted to the shape of the obturating bloc **20.** It can be for example of a square shape or rectangular shape, or any other polygonal shape, or circular, or ovoid. The lateral walls **10a, 10b, 10c, 10d** also define an external space **ES** wherein the concrete is poured.

The relative position of the obturating bloc **20** inside the adjusting device **10** can be adapted according to the needs, in particular to flush with the expected concrete height **H31.** The lateral walls **10a, 10b, 10c, 10d,** or at least one of them, are provided with one or several first adjusting elements **13a, 13b, 13c, 13d.** Such adjusting elements are arranged along the internal side of the lateral walls and/or oriented toward the internal space **IS** so as to maintain an obturating bloc **20** at a determined elevation **HE.**

The shape and number of such first adjusting elements **13a, 13b, 13c, 13d** are not determinant, provided that they are adapted to grip or maintain the obturating bloc **20** at the requested elevation **HE.** For example, each one of the lateral walls **10a, 10b, 10c, 10d** can comprise one first adjusting elements **13a, 13b, 13c, 13d,** arranged approximatively on a central portion of the corresponding wall. Alternatively or in addition, the first adjusting elements **13a, 13b, 13c, 13d** can be arranged in the corners formed by the lateral walls **10a, 10b, 10c, 10d.** Alternatively, one or several of the first adjusting elements **13a, 13b, 13c, 13d** can extend along the full length of the lateral walls or a substantial portion of the length of the lateral walls.

According to an embodiment, the first adjusting elements **13a, 13b, 13c, 13d** comprise a protruding part **130,** adapted to receive the bottom part of an obturating bloc **20.** The bottom part defines here a second surface **S20b,** opposite the first surface **S20a** of the obturating bloc **20.** The protruding portion **130** can be a flat surface, or teeth or any related arrangement. According to an embodiment, the protruding portion **130** can be a transversal member joining two opposite lateral walls so as to cross the internal space **IS.** This provides the advantage of strengthen the adjusting device **10,** in particular against the pressure of the concrete when pouring it. According to an embodiment, the protrusion **130** can be provided with one or several spikes, or one or several through holes adapted to insert a screw or a stud so as to penetrate the obturating bloc **20** on its second surface **S20b.** This arrangement allows to better maintain it on the first adjusting elements **13a, 13b, 13c, 13d** so as to avoid any displacement during the pouring operation. According to such an arrangement, the obturating bloc **20** can be lodged into the internal space of the adjusting device and rest on the first adjusting elements **13a, 13b, 13c, 13d.**

The first adjusting elements **13a, 13b, 13c, 13d** are arranged on the lateral walls **10a, 10b, 10c, 10d** of the adjusting device **10** in a way to take various position along the thickness or height of the lateral walls, the so called device height **H10.** The first adjusting elements **13a, 13b, 13c, 13d** can take for example several positions between a first lowest position **LP1** and a first highest position **HP1.** The first lowest position denotes here a position were the obturating bloc **20** is the most recessed within the adjusting device **10.** The lowest position can correspond to a position were the combined bloc height **H20** and device height **H10** forming the final height **FH,** is reduced at its minimum value. Its elevation **HE** is minimal or zero. The first highest position **HP1** here denotes a position wherein the obturating bloc **20** is taken out of the adjusting device **10** at its maximal value so that its elevation **HE** is maximal. The combined bloc height **H20** and device height **H10,** forming the final height **FH,** is at its largest value.

Several predetermined intermediate positions such as 2, 3 , 5 or more positions can be arranged. Alternatively, the first adjusting elements **13a, 13b, 13c, 13d** can be arranged so as to take any position between the first lowest position **LP1** and a first highest position **HP1.**

The adjusting device **10** comprises one or several first fixation means **14** adapted to maintain the corresponding first adjusting elements **13a, 13b, 13c, 13d** at their position. The first fixation means **14** can take the form of series of holes **140** arranged along a height of the corresponding wall **10a, 10b, 10c, 10d** wherein a pin or a screw or a rivet can be inserted so as to maintain the corresponding first adjusting elements **13a, 13b, 13c, 13d.** In this case the corresponding first adjusting elements **13a, 13b, 13c, 13d** can also be provided with a through hole so as to be fixed. Alternatively, the first adjusting elements **13a, 13b, 13c, 13d** can be provided with one or several spikes adapted to be inserted in the corresponding hole. Of course, alternatives comprising several series of holes can be envisaged. Alternatively, one or several sliders can be provided on the lateral walls **10a, 10b, 10c, 10d** so as to allow the corresponding first adjusting elements **13a, 13b, 13c, 13d** sliding between the first lowest position **LP1** and the first highest position **HP1.** A clamping element can furthermore be used.

According to an embodiment, no specific features are provided on the lateral walls **10a, 10b, 10c, 10d** except one ore several scales indicating some referenced height at which the first adjusting elements **13a, 13b, 13c, 13d** can be placed. Self-drilling screws can then be used to fix the first adjusting elements **13a, 13b, 13c, 13d** at the requested height onto the corresponding lateral walls.

Any fixation mean suitable for maintaining the corresponding first adjusting elements **13a, 13b, 13c, 13d** at a variable position can be used.

According to an embodiment, the adjusting device **10** is built in a manufacture prior being sent at the point of use. The first adjusting elements **13a, 13b, 13c, 13d** are thus arranged onto the adjusting device so as to correspond to the expected needs. The manufacture of such adjusting device **10** can be made on demand and adapted according to the specific needs. According to another embodiment, the adjusting device **10** is delivered as several disassembled parts such as the lateral walls, the separate first adjusting elements **13a, 13b, 13c, 13d** and the corresponding first fixation means **14.** The adjusting device can then be assembled at the point of use according to the present needs.

It is understood that, the first adjusting elements **13a, 13b, 13c, 13d** and/or the corresponding first fixation means **14** are easily assembled so that a minimum time and efforts are necessary. Thus, clips or rivets or self-drilling screws are well adapted for this purpose.

According to an embodiment, the lateral walls are already preassembled so as to correspond to the dimensions of an obturating bloc **20.** Alternatively, the lateral walls **10a, 10b, 10c, 10d,** can be provided separately so as to be assembled on site according to the dimensions of the obturating blocs **20.** To this end, several connection points can be provided so as to adapt the shape and/or the dimension of the adjusting device **10.**

The adjusting device **10** is a sacrificial device, meaning that it is included in the concrete so that it cannot be retrieved after the pouring. It is thus advantageously cost effective. The material of the adjusting device **10** can be selected in consideration of the performances toward the pressure of the concrete, at the time of pouring, and also in consideration of costs. It can be made of metal, such as stainless steel, which is heavy or aluminium, which is lighter. Alternatively, it can be made of a polymer material such as a soft plastic, a hard plastic, a composite material, a cellulosic material. Alternatively, it can be made of a natural product, such as wood, while being quite heavy, or based on natural fibres. According to an embodiment, the adjusting device **10** can be made, partly or entirely, with cardboard. In particular, the lateral walls **10a, 10b, 10c, 10d** can be made of a cellulosic material, such as cardboard. Although the first adjusting elements **13a, 13b, 13c, 13d** can also be made of cardboard, they can be made with a different material such as hard plastic or polymer.

The adjusting device **10** according to the present disclosure is adapted to be placed on a surface, like a reference surface, in a way that the edge of the lateral walls **10a, 10b, 10c, 10d** rest on such a surface. For example a support **4** can be provided, adapted to receive the concrete, on which is placed the present adjusting device **10.** The support **4** can be made for example with wood or any suitable material like cement or concrete already poured and dried. From such a reference surface, the first fixation means **14** allow to adjust the corresponding first adjusting elements **13a, 13b, 13c, 13d** at a variable height on the lateral walls **10a, 10b, 10c, 10d** between a first lowest position **LP1** and the first highest position **HP1,** so as to give the correct elevation to an obturating bloc **20.**

The adjusting device **20** according to the present invention further comprises one or more second adjusting elements **12, 12a, 12b,** arranged on the external side of the lateral walls **10a, 10b, 10c, 10d** and/or oriented towards the external space **ES.** Such second adjusting elements allow to better maintain the adjusting device **10** in the poured concrete. Not according to the invention, such second adjusting element are arranged at a non variable predetermined position. According to the invention, the second adjusting elements **12, 12a, 12b,** are also movable between a second lowest position **LP2** and a second highest position **HP2** (figures 3a, 3b). In case an opening **30** is already materialised in the support **4,** the second adjusting elements **12, 12a, 12b** are adapted to adjust the relative position of the adjusting device **10** and the opening **30** will maintaining it onto the support **4.** In other words, the lateral walls **10a, 10b, 10c, 10d** can be arranged below the reference surface. Under such conditions, the second adjusting elements **12, 12a, 12b** rest on the reference surface. Such an arrangement is advantageous for situations where the expected concrete height **H31** is lower than the thickness of the obturating bloc **20.** The obturating bloc 20 can then partly be recessed across the reference surface so that its first surface **S20a** still flushes with the surface of the concrete **S31a.**

The second adjusting element **12, 12a, 12b** comprises some protrusions **120** external to the lateral walls and/or directed outwards. According to an embodiment, the external protrusion **120** can be provided with additional fixtures **121a, 121b** allowing for example spiking the adjusting device **10** onto the support **4.**

The adjusting device **10,** while allowing to adjust the degree of elevation of an obturating bloc **20,** may represent an obstacle to access the obturating bloc **20** from a lateral side. In particular, the obturating bloc **20** can be made of a soft material such as plaster, rockwool, polystyrene, layer of mineral fibres also known as Aestuver, Promat, etc, so as to be dig to insert some features such as pipes or cables. The obturating bloc can be as described in the patent EP3730722. The obturating bloc 20 can be provided with lateral recesses **21** so as to be better maintained in the poured concrete.

According to an embodiment, the lateral walls **10a, 10b, 10c, 10d** of the adjusting device **10** are provided with through holes and/or with pre-cut areas **15,** allowing to easily access the obturating bloc **20.** Some features such as pipes can thus be inserted to the obturating bloc through the adjusting device **10.** Insertion of such features can be made before pouring the concrete.

The present disclosure also relates to an assembly **100, 100'** comprising an adjusting device **10** as described above and an obturating bloc **20** arranged inside the internal space IS of the adjusting device **10.** The assembly **100, 100'** is better shown in figures **4****,** **5** and **6****.** The obturating bloc **20** is maintained by means of the above described first adjusting elements **13a, 13b, 13c, 13d** and the corresponding first fixation means **14.** As mentioned above, the obturating bloc **20** is inserted in the internal space IE so as to rest on the first adjusting elements **13a, 13b, 13c, 13d.**

In the assembly **100, 100'** the obturating bloc **20** has a bloc height **H20,** a first surface **S20a** and a second surface **S20b** opposite the first surface. The adjusting device has a device height **H10,** corresponding typically to the height of its lateral walls. The assembly **100, 100'** has a final height **FH** which can be adapted thanks to the first adjusting elements **13a, 13b, 13c, 13d.** The final height **FH** corresponds to the elevation height **HE** added to the bloc height **H20.** It is noted that the elevation height **HE** can be negative, in particular, when the adjusting device **10** is recessed in an opening **30,** as above described. The elevation height **HE** corresponds to the relative position of the second surface of **S20b** of the obturating bloc **20** with regards the reference surface. The final height **FH** can be adapted to be equal, lower or larger than the bloc height **H20.**

According to an embodiment, the assembly **100** is arranged on site so that the adjusting device **10** rests on a support 4, wherein the obturating bloc **20** rests on the first adjusting elements **13a, 13b, 13c, 13d.** This arrangement is convenient when pouring an horizontal slab and wherein the first surface **S20a** of the obturating bloc **20** should flush with the top surface **S31a** of the concrete.

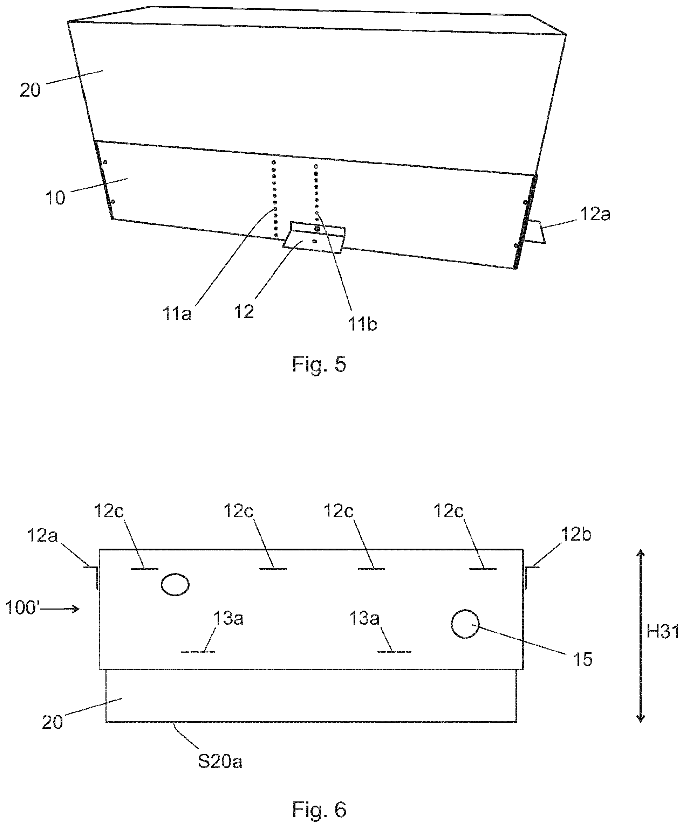

According to another embodiment, the assembly **100'** can be arranged upside down, better shown in figure 6. A reverse arrangement corresponds to the situation where the obturating bloc **20** rests on the support **4,** on its first surface **S20a,** and the adjusting device **10** is placed on the obturating bloc **20,** through the first adjusting elements **13a, 13b, 13c, 13d** so that the lateral walls can project upward. Such an arrangement allows to make the first surface **S20a** of the obturating bloc **20** flushing with the bottom surface **S31b** of the slab, while avoiding covering the obturating bloc **20** with concrete during the pouring. The concrete is here kept outside the internal space **IS** of the adjusting device **10** so as to preserve the obturating bloc **20.** Under such condition, the final height **FH** of the assembly **100'** can be defined to correspond to the expected concrete height **H31** or to be higher.

The present disclosure also relates to a method of pouring a concrete wall or slab **31** having a concrete height **H31** and comprising an opening **30.** The present method allows in particular to preserve an area corresponding to the opening **30** of the final wall or slab **31** so that it is not covered by the concrete when pouring it. This avoids extra work related to the formwork.

The method comprises a step **S1** of adjusting the height of the first adjusting elements **13a, 13b, 13c, 13d** between a first lowest position **LP1** and a first highest position **HP1** on the corresponding lateral walls **10a, 10b, 10c, 10d** of the adjusting device **10.** The position of the first adjusting elements **13a, 13b, 13c, 13d** is defined according to the bloc height **H20,** to the expected concrete height **H31,** and in consequence to the corresponding final height **FH** of the assembly **100'** and/or the elevation **EH** of the obturating bloc **20.** The bloc heigh **20** needs not to correspond to the expected thickness of the wall or slab **31.**

The present method comprises a step **S2** of assembling the obturating bloc **20** and the adjusting device **10** so as to form the corresponding assembly **100, 100'.**

The present method further comprises a step **S3** of placing the assembly **100, 100'** as above defined at a place corresponding to an opening **30** which needs to be reserved in the slab. The assembly can be placed on a support **4,** which is preferably a temporary support on which is poured the concrete. The support **4** will thus remain free of concrete where is placed the assembly **100, 100'** after the pouring. It is noted that according to the needs, the assembly can be placed in one of the two orientations above-described, wherein the obturating bloc **20** is arranged downward or upward.

The present method further comprises a step **S4** of adjusting one or several second adjusting elements **12, 12a, 12b.**

In case the adjusting device **10** is provided with through holes or pre-cut areas **15.** The method can also comprise a step **S5** of drilling the obturating bloc **20** across the adjusting device **10** so as to insert features such pipes or cables.

The method further comprises the step **S6** of pouring the concrete around the assembly **100, 100'** up to the expected concrete height **H31.**

### reference symbols in the figures

- 10: Adjusting device
- 14: Fixation means
- 15: Pre-cut areas
- 140: holes
- 20: Obturating bloc
- S20a: First surface of the bloc
- S20b: Second surface of the bloc
- 4: Support
- HE: Elevation
- H10: Device height
- H20: Bloc height
- H31: Concrete height
- FH: Final height
- IS: Internal space
- ES: External space
- 31: Slab
- S31a: first surface of concrete slab
- S31b: Second surface of the concrete slab
- 10a, 10b, 10c, 10d: Lateral walls
- 13a, 13b, 13c, 13d: First adjusting elements
- 12, 12a, 12b: Second adjusting elements
- 120, 130: Protruding part
- 121a, 121b: Additional fixtures
- LP1: First lowest position
- HP1: First highest position
- LP2: Second lowest position
- HP2: Second highest position
- 100, 100': Assembly

## Claims

1. An adjusting device (10) adapted to maintain an obturating bloc (20) in a concrete pouring at a predetermined position with respect to a support (4) comprising lateral walls (10a, 10b, 10c, 10d) defining an internal space (IS), where said obturating bloc (20) can be lodged, and an external space (ES), where the concrete is poured,
wherein said lateral walls have a predetermined device height (H10) and wherein at least one of said lateral walls is provided with one or several first adjusting elements (13a, 13b, 13c, 13d) oriented toward the internal space (IS) and one or several first fixation means (14), wherein said one or several first fixation means (14) are adapted to maintain said one or several first adjusting elements (13a, 13b, 13c, 13d) at a variable position on said lateral walls (10a, 10b, 10c, 10d) between a first lowest position (LP1) and a first highest position (HP1), **characterized in that** said adjusting device further comprises at least one second adjusting element (12, 12a, 12b), arranged on the external side of the lateral walls and oriented towards the external space (ES) and at least one second fixation means adapted to maintain said at least one second adjusting element (12, 12a, 12b), at a variable position on said lateral walls (10a, 10b, 10c, 10d) between a second lowest position (LP2) and a second highest position (HP2).

2. Adjusting device according to claim 1, wherein said one or several first adjusting elements (13a, 13b, 13c, 13d) comprises an internal protrusion (130) projecting toward the internal space (IS).

3. Adjusting device according to one of claims 1 and 2, wherein said one or several first fixation means (14) comprises one or more of a slider, a clamp, a clip, a screw, a bolt, a staple, and a rivet.

4. Adjusting device according to on of claims 1 to 3, said at least one second adjusting element (12, 12a, 12b) comprising an external protrusion (120) directed outwards.

5. Adjusting device according to one of claims 1 to 4, wherein at least one of said lateral walls (10a, 10b, 10c, 10d) comprises one or several through holes and/or pre-cut areas (15).

6. Assembly (100, 100') comprising an adjusting device (1) according to one of claims 1 to 5 and further comprising an obturating bloc (20) arranged inside the internal space (IS) of said adjusting device, and maintained by means of said one or several first adjusting elements (13a, 13b, 13c, 13d).

7. Assembly according to claim 6, said obturating bloc (20) having a bloc height (H20), a first surface (S20a) and a second surface (S20b), and said adjusting device having a device height (H10), and wherein the position of said one or several first adjusting elements (13a, 13b, 13c, 13d) can be adapted so that the final height (HF) of the assembly is equal or larger than the bloc height (H20).

8. Method of pouring a concrete wall (31) having a concrete height (H31) and comprising an opening (30), the method comprising the steps of :
- Arranging an adjusting device (10) according to one of claims 1 to 5, and adjusting the corresponding first adjusting elements (13a, 13b, 13c, 13d) so as to place an obturating bloc (20) at a proper elevation (HE),
- Assembling said adjusting device (10) with the corresponding obturating bloc (20) so as to provide an assembly (100, 100') according to one of claims 6 and 7,
- placing the obtained assembly (100, 100') on a support (4) at a place corresponding to the opening (30),
- adjusting said at least one second adjusting elements (12, 12a, 12b), and
- pouring the concrete around the assembly up to the expected height (H31).

9. Method according to claim 8, wherein the assembly (100, 100') is placed so that the obturating bloc (20) is arranged downward or upward.

10. Method according to one of claims 8 and 9 wherein said adjusting device (10) is provided with at least one through hole or pre-cut area (15), the method further comprising drilling the obturating bloc (20) across the adjusting device (10), before pouring the concrete.

## Patentansprüche

1. Einstellvorrichtung (10), welche dazu geeignet ist, einen Verschlussblock (20) in einer Betonschüttung an einer vorbestimmten Position in Bezug auf einem Träger (4) zu halten, mit Seitenwänden (10a, 10b, 10c, 10d), die einen Innenraum (IS), wo der besagte Verschlussblock (20) untergebracht werden kann, und einen Aussenraum (ES), wo der Beton gegossen wird, definieren,
worin die besagten Seitenwände eine vorbestimmte Vorrichtungshöhe (H10) aufweisen, und worin mindestens eine der Seitenwände mit einem oder mehreren ersten Einstellelementen (13a, 13b, 13c, 13d), die in Richtung des Innenraums (IS) ausgerichtet sind, und einem oder mehreren ersten Befestigungsmitteln (14) versehen ist, worin das besagte eine oder die besagten mehreren ersten Befestigungsmittel (14) dazu geeignet sind, das besagte eine oder die besagten mehreren ersten Einstellelemente (13a, 13b, 13c, 13d) an einer variablen Position auf den besagten Seitenwänden (10a, 10b, 10c, 10d) zwischen einer ersten niedrigen Position (LP1) und einer ersten höheren Position (HP1) zu halten
**dadurch gekennzeichnet, dass**
die besagte Einstellvorrichtung zudem mindestens ein zweites Einstellelement (12, 12a, 12b) umfasst, welches an der Aussenseite der Seitenwände angeordnet und zum Aussenraum (ES) hin ausgerichtet ist, sowie mindestens ein zweites Befestigungsmittel, welches dazu geeignet ist, das besagte mindestens eine zweite Einstellelement (12, 12a, 12b) an einer variablen Position an den besagten Seitenwänden (10a, 10b, 10c, 10d) zwischen einer zweiten niedrigen Position (LP2) und einer zweiten höheren Position (HP2) zu halten.

2. Einstellvorrichtung gemäss Anspruch 1, worin das besagte eine oder die besagten mehreren ersten Einstellelemente (13a, 13b, 13c, 13d) einen inneren Vorsprung (130) aufweisen, der in Richtung des Innenraums (IS) ragt.

3. Einstellvorrichtung gemäss einem der Ansprüche 1 und 2, worin das besagte eine oder die besagten mehreren ersten Befestigungsmittel (14) eines oder mehrere der folgenden Elemente umfassen: einen Schieber, eine Klammer, einen Clip, eine Schraube, einen Bolzen, einen Hefter und einen Niet.

4. Einstellvorrichtung gemäss einem der Ansprüche 1 bis 3, worin das besagte mindestens eine zweite Einstellelement (12, 12a, 12b) einen nach aussen gerichteten äusseren Vorsprung (120) aufweist.

5. Einstellvorrichtung gemäss einem der Ansprüche 1 bis 4, worin mindestens eine der besagten Seitenwände (10a, 10b, 10c, 10d) ein oder mehrere Durchgangslöcher und/oder vorgestanzte Bereiche (15) aufweist.

6. Baugruppe (100, 100') mit einer Einstellvorrichtung (1) gemäss einem der Ansprüche 1 bis 5, und zudem mit einen Verschlussblock (20), welcher im Innenraum (IS) der besagten Einstellvorrichtung angeordnet ist und mittels des besagten einen oder der besagten mehreren ersten Einstellelemente (13a, 13b, 13c, 13d) gehalten wird.

7. Baugruppe gemäss Anspruch 6, wobei der besagte Verschlussblock (20) eine Blockhöhe (H20), eine erste Oberfläche (S20a) und eine zweite Oberfläche (S20b) aufweist, und wobei die besagte Einstellvorrichtung eine Vorrichtungshöhe (H10) aufweist, und worin die Position des besagten einen oder der besagten mehreren ersten Einstellelemente (13a, 13b, 13c, 13d) derart angepasst werden kann, dass die endgültige Höhe (HF) der Baugruppe gleich oder grösser als die Blockhöhe (H20) ist.

8. Verfahren zum Giessen einer Betonwand (31) mit einer Betonhöhe (H31) und einer Öffnung (30), wobei das Verfahren die folgenden Schritte umfasst:
- Anordnen einer Einstellvorrichtung (10) gemäss einem der Ansprüche 1 bis 5 und Einstellen der entsprechenden ersten Einstellelemente (13a, 13b, 13c, 13d), um einen Verschlussblock (20) auf einer geeigneten Höhe (HE) zu platzieren,
- Zusammenbau der besagten Einstellvorrichtung (10) mit dem entsprechenden Verschlussblock (20), um eine Baugruppe (100, 100') gemäss einem der Ansprüche 6 und 7 bereitzustellen,
- Platzieren der erhaltenen Baugruppe (100, 100') auf einem Träger (4) an einer Stelle, welche der Öffnung (30) entspricht,
- Einstellen der besagten mindestens eine zweite Einstellelemente (12, 12a, 12b),
und
- Giessen des Betons um die Baugruppe herum bis zur vorgesehenen Höhe (H31).

9. Verfahren gemäss Anspruch 8, worin die Baugruppe (100, 100') derart platziert wird, dass der Verschlussblock (20) nach unten oder nach oben ausgerichtet ist.

10. Verfahren gemäss einem der Ansprüche 8 und 9, worin die besagte Einstellvorrichtung (10) mit mindestens einem Durchgangsloch oder vorgestanzten Bereich (15) versehen ist, wobei das Verfahren zudem das Bohren des Verschlussblocks (20) quer durch die Einstellvorrichtung (10) vor dem Giessen des Betons umfasst.

## Revendications

1. Dispositif de réglage (10) adapté pour maintenir un bloc d'obturation (20) dans un coulage de béton à une position prédéterminée par rapport à un support (4) comprenant des parois latérales (10a, 10b, 10c, 10d) définissant un espace interne (IS), dans lequel ledit bloc d'obturation (20) peut être logé, et un espace externe (ES), où le béton est coulé, dans lequel lesdites parois latérales ont une hauteur de dispositif prédéterminée (H10) et dans lequel au moins une desdites parois latérales est pourvue d'un ou plusieurs premiers éléments de réglage (13a, 13b, 13c, 13d) orientés vers l'espace interne (IS) et un ou plusieurs premiers moyens de fixation (14), lesdits un ou plusieurs premiers moyens de fixation (14) étant adaptés pour maintenir lesdits un ou plusieurs premiers éléments de réglage (13a, 13b, 13c, 13d) dans une position variable sur lesdites parois latérales (10a, 10b, 10c, 10d) entre une première position la plus basse (LP1) et une première position la plus haute (HP1), **caractérisé en ce que** ledit dispositif de réglage comprend en outre au moins un deuxième élément de réglage (12, 12a, 12b), disposé sur le côté extérieur des parois latérales et orienté vers l'espace extérieur (ES), et au moins un deuxième moyen de fixation adapté pour maintenir ledit au moins un deuxième élément de réglage (12, 12a, 12b), dans une position variable sur lesdites parois latérales (10a, 10b, 10c, 10d) entre une deuxième position la plus basse (LP2) et une deuxième position la plus haute (HP2).

2. Dispositif de réglage selon la revendication 1, dans lequel ledit ou lesdits premiers éléments de réglage (13a, 13b, 13c, 13d) comprennent une saillie interne (130) se projetant vers l'espace interne (IS).

3. Dispositif de réglage selon l'une des revendications 1 et 2, dans lequel ledit ou lesdits premiers moyens de fixation (14) comprennent un ou plusieurs éléments parmi un coulisseau, une pince, un clip, une vis, un boulon, une agrafe et un rivet.

4. Dispositif de réglage selon l'une des revendications 1 à 3, ledit au moins un deuxième élément de réglage (12, 12a, 12b) comprenant une saillie externe (120) dirigée vers l'extérieur.

5. Dispositif de réglage selon l'une des revendications 1 à 4, dans lequel au moins l'une desdites parois latérales (10a, 10b, 10c, 10d) comprend un ou plusieurs trous traversants et/ou zones prédécoupées (15).

6. Ensemble (100, 100') comprenant un dispositif de réglage (1) selon l'une des revendications 1 à 5 et comprenant en outre un bloc d'obturation (20) disposé à l'intérieur de l'espace interne (IS) dudit dispositif de réglage, et maintenu au moyen dudit ou des premiers éléments de réglage (13a, 13b, 13c, 13d).

7. Ensemble selon la revendication 6, ledit bloc d'obturation (20) ayant une hauteur de bloc (H20), une première surface (S20a) et une deuxième surface (S20b), et ledit dispositif de réglage ayant une hauteur de dispositif (H10), et dans lequel la position dudit ou desdits premiers éléments de réglage (13a, 13b, 13c, 13d) peut être adaptée de manière à ce que la hauteur finale (HF) de l'ensemble soit égale ou supérieure à la hauteur du bloc (H20).

8. Procédé de coulage d'une paroi en béton (31) ayant une hauteur de béton (H31) et comprenant une ouverture (30), le procédé comprenant les étapes consistant à :
- Disposer un dispositif de réglage (10) selon l'une des revendications 1 à 5, et régler les premiers éléments de réglage correspondants (13a, 13b, 13c, 13d) de manière à placer un bloc d'obturation (20) à une hauteur appropriée (HE),
- assembler ledit dispositif de réglage (10) avec le bloc d'obturation correspondant (20) de manière à obtenir un ensemble (100, 100') selon l'une des revendications 6 et 7,
- placer l'ensemble obtenu (100, 100') sur un support (4) à un emplacement correspondant à l'ouverture (30),
- ajuster lesdits au moins deuxièmes éléments de réglage (12, 12a, 12b), et
- couler le béton autour de l'ensemble jusqu'à la hauteur prévue (H31).

9. Procédé selon la revendication 8, dans lequel l'ensemble (100, 100') est placé de telle sorte que le bloc d'obturation (20) soit disposé vers le bas ou vers le haut.

10. Procédé selon l'une des revendications 8 et 9, dans lequel ledit dispositif de réglage (10) est muni d'au moins un trou traversant ou d'une zone prédécoupée (15), le procédé comprenant en outre le perçage du bloc d'obturation (20) à travers le dispositif de réglage (10), avant de couler le béton.
